# EUROPÄISCHE PATENTSCHRIFT

(11) **EP 2 012 955 B1**
(45) Veröffentlichungstag und Bekanntmachung des Hinweises auf die Patenterteilung: **19.06.2013**
(21) Anmeldenummer: 07724301.2
(22) Anmeldetag: 17.04.2007
(51) Int. Cl.: B23B 29/24

(54) **SPANNKOPF**
GRIP HEAD
TETE DE SERRAGE

(30) Priorität: 21.04.2006 DE 102006018652
(43) Veröffentlichungstag der Anmeldung: 14.01.2009
(73) Patentinhaber: Wiedmann, Jörg, 71404 Korb (DE)
(72) Erfinder: Wiedmann, Jörg, 71404 Korb (DE)
(74) Vertreter: Gleiss, Alf-Olav
(86) Internationale Anmeldenummer: PCT/EP2007/003363
(87) Internationale Veröffentlichungsnummer: WO 2007/121892

(56) Entgegenhaltungen:
- DE-A1- 19 921 215
- FR-A- 877 033
- GB-A- 1 010 195

## Beschreibung

Die Erfindung betrifft einen Spannkopf für Werkzeuge oder Wechselhalter gemäß Oberbegriff des Anspruchs 1, außerdem ein Verfahren zur Realisierung einer Lagesicherungseinrichtung an einem Spannkopf gemäß Oberbegriff des Anspruchs 11.

Spannköpfe der hier angesprochenen Art sind beispielsweise aus der britischen Patentschrift GB 1,010,195 A bekannt. Sie dienen dazu, verschiedene Werkzeuge lagegenau zu halten. Dabei werden mit dem Begriff "Werkzeug" unmittelbar am Spannkopf angebrachte Werkzeuge und mit dem Begriff "Wechselhalter" Haltevorrichtungen bezeichnet, an denen Werkzeuge befestigt werden können und die ihrerseits vom Spannkopf gehalten werden. Der Spannkopf weist einen Grundkörper mit mindestens zwei in diesen eingebrachte Nuten auf, in die auch als Haltebereiche bezeichnete Vorsprünge des Werkzeugs beziehungsweise des Wechselhalters eingreifen. Im Bereich mindestens einer der Nuten ist wenigstens ein Klemmstück vorgesehen, das im Grundkörper der Spannkopfs beweglich gelagert ist. Es kann damit eine Klemm- und eine Freigabeposition einnehmen. Mittels einer Klemmvorrichtung wird es zumindest in die Klemmposition verlagert. Es ist möglich, die Klemmvorrichtung so auszugestalten, dass das Klemmstück mit dieser auch in die Freigabeposition verlagert wird. Vorzugsweise ist aber vorgesehen, dass das Klemmstück mit einer Kraft beaufschlagt wird, die es in die Freigabeposition drängt, wenn die Klemmvorrichtung entsprechend betätigt wird. In diesem Fall beaufschlagt die Klemmvorrichtung das Klemmstück nur dann mit Kräften, wenn dieses in die Klemmposition verlagert werden soll. Das Klemmstück weist eine Klemmfläche auf, die in der Klemmposition über eine Flanke der mindestens einen Nut vorsteht und damit auf das Werkzeug beziehungsweise den Wechselhalter einwirkt. Es ist eine Lagesicherungseinrichtung vorgesehen, die eine Verdrehung des Klemmstücks im Grundkörper des Spannkopfs vermeidet. Gleichzeitig behindert die Lagesicherungseinrichtung eine Verlagerung des Klemmstücks in die Klemmposition und in die Freigabeposition nicht.

Es hat sich herausgestellt, dass bekannte Spannköpfe und insbesondere deren Klemmstücke beziehungsweise Lagesicherungseinrichtungen kompliziert aufgebaut und daher aufwendig und kostenintensiv zu fertigen sind.

Aufgabe der Erfindung ist es daher, einen Spannkopf für Werkzeuge oder Wechselhalter zu schaffen, der die genannten Nachteile nicht aufweist.

Diese Aufgabe wird gelöst durch einen Spannkopf mit den Merkmalen des Anspruchs 1. Dieser zeichnet sich dadurch aus, dass die Lagesicherungseinrichtung einen Stift aufweist, der in eine Bohrung einsetzbar ist. Die Bohrung ist so positioniert, dass ihre Wandung sowohl das Klemmstück als auch den Grundkörper des Spannkopfs schneidet und im Wesentlichen parallel zum Verlagerungsweg des Klemmstücks innerhalb des Grundkörpers verläuft. Eine derartige Ausgestaltung des Spannkopfes ist relativ einfach und preisgünstig realisierbar.

Weitere Ausgestaltungen ergeben sich aus den Unteransprüchen.

Zur Lösung dieser Aufgabe wird auch ein Verfahren zur Realisierung einer Lagesicherungseinrichtung vorgeschlagen, das die in Anspruch 11 genannten Merkmale aufweist. Das Verfahren zeichnet sich dadurch aus, dass die Bohrung zur Aufnahme eines Stifts erst dann bereichsweise in den Grundkörper und bereichsweise in das Klemmstück eingebracht wird, wenn dieser montiert und das Klemmstück mittels der Klemmvorrichtung verspannt und ausgerichtet ist und damit seine Klemmposition einnimmt. Nach Einbringung der Bohrung wird der Stift in diese eingeführt, ohne dass die Klemmposition des Klemmstücks vorher verlassen würde. Durch die Einbringung der Bohrung und das Einsetzen des Stifts im verspannten Zustand des Klemmstücks wirken sich Fertigungstoleranzen bezüglich des Klemmstücks, des dieses aufnehmenden Grundkörpers, bezüglich der in diesen verlaufenden Nut nicht aus.

Weitere Ausführungsformen des Verfahrens ergeben sich aus den Unteransprüchen.

Im Folgenden wird die Erfindung anhand der Zeichnung näher erläutert. Es zeigen:
- Figur 1: eine perspektivische Ansicht eines Spannkopfs;
- Figur 2: eine Draufsicht auf den Spannkopf gemäß Figur 1;
- Figur 3: eine Draufsicht auf den in den Figuren 1 und 2 dargestellten Spannkopf mit einem Wechselhalter;
- Figur 4: eine perspektivische Ansicht des Spannkopfs mit dem Wechselhalter und
- Figur 5: eine Draufsicht auf einen Wechselhalter mit einem Klemmstück.

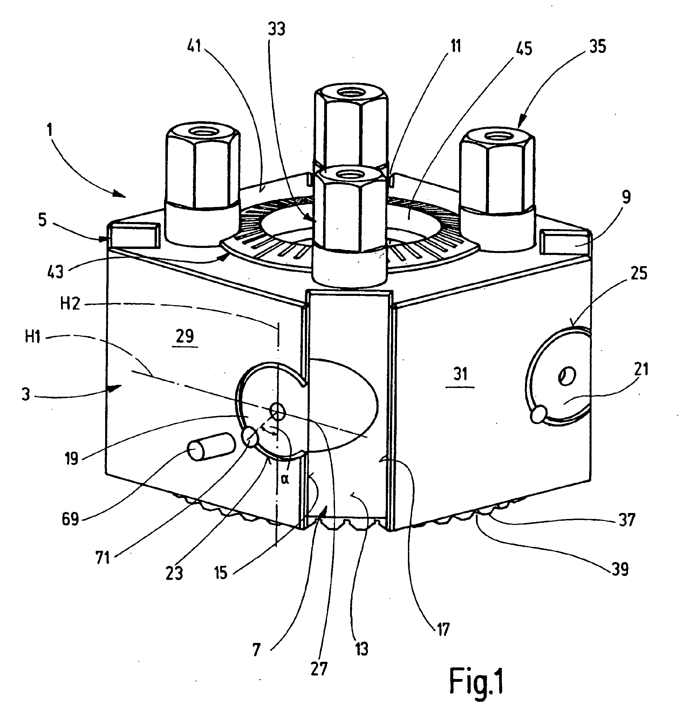

Figur 1 zeigt einen Spannkopf 1 für Werkzeuge oder Wechselhalter mit einem Grundkörper 3, in den mindestens zwei Nuten 5 und 7 eingebracht sind. Bei dem hier dargestellten Ausführungsbeispiel sind insgesamt vier Nuten vorgesehen, also außer den Nuten 5 und 7 noch Nuten 9 und 11. Die Nuten 5 bis 11 sind grundsätzlich identisch ausgebildet, sodass die hier folgenden Erläuterungen zur Nut 7 entsprechend für die anderen Nuten 5, 9 und 11 gelten.

Die Nuten weisen eine Grundfläche 13 auf, von der auch als Flanken bezeichnete Seitenflächen 15 und 17 ausgehen. Diese verlaufen hier beispielhaft im Wesentlichen senkrecht zur Grundfläche 13.

Die Seitenflächen 15 und 17 einer Nut schließen mit den Seitenflächen benachbarter Nuten einen Winkel ein, sodass eine so genannte Schwalbenschwanz-Ausgestaltung realisiert wird. Darauf wird unten noch näher eingegangen.

Aus Figur 1 ist ersichtlich, dass den Nuten hier jeweils mindestens ein Klemmstück zugeordnet ist. Bei der perspektivischen Darstellung gemäß Figur 1 wird deutlich, dass der Nut 7 ein Klemmstück 19 und der Nut 9 ein Klemmstück 21 zugeordnet ist. Entsprechendes ist für die Nuten 5 und 11 vorgesehen.

Die Nuten 5, 7, 9 und 11 verlaufen von oben nach unten durch den Grundkörper 3 und öffnen sich nach außen. Sie erstrecken sich über die gesamte Höhe des Grundkörpers 3, sodass von oben oder unten in die Nuten 5, 7 9 und 11 Haltebereiche von Werkzeugen beziehungsweise Werkzeughaltern einführbar sind. Dabei wird ein Werkzeug beziehungsweise Werkzeughalter in jeweils zwei benachbarten Nuten geführt und gehalten. Die Breite der Nuten ist so gewählt, dass beispielsweise ein erstes Werkzeug sich in den Nuten 5 und 7 halten kann, während ein zweites Werkzeug sich in den Nuten 7 und 9 hält. Entsprechend können weitere Werkzeuge beziehungsweise Wechselhalter in den Nuten 9 und 11 und 11 und 5 geführt beziehungsweise gehalten werden.

Die Klemmstücke des Spannkopfs 1, von denen, wie gesagt, hier lediglich die Klemmstücke 19 und 21 sichtbar sind, sind zylindrisch ausgebildet und in Bohrungen 23 und 25 untergebracht, die innerhalb des Grundkörpers 3 so verlaufen, dass sie eine Seitenfläche einer Nut und deren Grundfläche schneiden. Aus Figur 1 ist ersichtlich, dass die Bohrung 23 die Seitenfläche 15 der Nut 7 und deren Grundfläche 13 schneidet. Die gegenüberliegende Seitenfläche 17 ist also unversehrt. Das in die Bohrung 23 eingesetzte Klemmstück 19 weist in seiner Außenseite eine Aussparung auf, sodass eine Klemmfläche 27 gebildet wird, die im Wesentlichen parallel zur Seitenfläche 15 verläuft. Die Aussparung im Klemmstück 19 muss außerdem so ausgebildet sein, dass dieses die Grundfläche 13 möglichst nicht überragt, also in Figur 1 über die Grundfläche 13 nicht in Richtung zum Betrachter vorspringt.

Bei dem in Figur 1 dargestellten Ausführungsbeispiel des Spannkopfs, dessen Grundkörper 3 viereckig, hier praktisch quadratisch, ausgebildet ist, verlaufen die Bohrungen für die Klemmstücke, hier die Bohrung 23 für das Klemmstück 19 und die Bohrung 25 für das Klemmstück 21 senkrecht zu den Seitenflächen des Grundkörpers 3, wobei die Bohrung 23 senkrecht zur Seitenfläche 29 und die Bohrung 25 senkrecht zur Seitenfläche 31 des Grundkörpers 3 verläuft. Die Bohrungen 23, 25 verlaufen also zu den Längsachsen der zugehörigen Nuten 7, 9 vorzugsweise unter einem Winkel von 90°. Die Klemmstücke sind in Richtung der Längsachse der Bohrungen beweglich. Es zeigt sich, dass bei einer Bewegung des Klemmstücks 19 in den Grundkörper 3 des Spannkopfs 1 hinein die Klemmfläche 27 über die Seitenfläche 15 der Nut 7 vorsteht und damit auf einen Haltebereich eines Werkzeugs beziehungsweise Wechselhalters einwirkt.

Bei einer Bewegung des Klemmstücks 19 in den Grundkörper 3 hinein wird dieses in dessen Klemmposition verlagert, in der die Klemmfläche 27 also über die Seitenfläche 15 vorspringt. Bei einer entgegengesetzten Bewegung des Klemmstücks 19 in dessen Freigabestellung fluchtet die Klemmfläche 27 mit der Seitenfläche 15 oder springt gegenüber dieser zurück, sodass die Klemmfläche 27 nicht in die Nut 7 hineinragt.

Die Nuten dienen also lediglich zur Aufnahme eines Wechselhalters oder Werkzeugs und nicht zur Aufnahme des zylindrischen Klemmstücks. Dessen Aussparung ist in der Freigabestellung des Klemmstücks so angeordnet, dass kein Bereich des Klemmstücks in die Nut hineinragt.

Die Betätigung der Klemmstücke erfolgt über mindestens eine Klemmvorrichtung. Bei dem hier dargestellten Ausführungsbeispiel ist vorgesehen, dass jedes der Klemmstücke mittels einer eigenen Klemmvorrichtung verlagerbar ist. Entsprechend sind eine Klemmvorrichtung 33 für das Klemmstück 19 und eine Klemmvorrichtung 35 für das Klemmstück 21 vorgesehen. Die beiden anderen hier dargestellten Klemmvorrichtungen sind für die den Nuten 5 und 11 zugeordneten Klemmstücke vorgesehen.

Die Ausgestaltung der Klemmvorrichtungen kann an verschiedene Anforderungen angepasst werden. Vorzugsweise umfassen sie einen Exzenterbereich, der mit dem zugehörigen Klemmstück zusammenwirkt und dafür sorgt, dass bei einer Drehung des Exzenterbereichs das Klemmstück mehr oder weniger weit in den Grundkörper 3 hineingezogen wird und damit seine Klemmposition einnimmt. Bei dem hier dargestellten Ausführungsbeispiel weisen die Klemmvorrichtungen an ihrem oberen, aus dem Grundkörper 3 herausragenden Ende einen entsprechenden Mehrkantbereich auf, an dem ein geeignetes Werkzeug angreifen kann. Mit diesem kann der Exzenter mehr oder weniger weit gedreht werden, um das zugehörige Klemmstück in seine Klemmposition zu verlagern. Grundsätzlich ist es denkbar, wie oben bereits angedeutet, durch eine Drehung der Klemmvorrichtung in eine Richtung das Klemmstück in seine Klemmposition zu verlagern und durch eine Drehung in die entgegengesetzte Richtung das Klemmstück in seine Freigabeposition zu bewegen. Diese Bewegung kann durch ein geeignetes Federelement unterstützt werden. Denkbar ist es auch, dass die Kräfte zur Verlagerung des Klemmstücks in die Freigabeposition ausschließlich durch die Federeinrichtung aufgebracht werden.

Bei dieser Gelegenheit sei noch darauf hingewiesen, dass über die Höhe des Grundkörpers 3 des Spannkopfs 1 gesehen auch mehrere übereinander liegende Klemmstücke vorgesehen werden können. Die Anzahl der Klemmstücke pro Nut hängt von der Größe des Spannkopfs 1 und der festzuklemmenden Werkzeuge beziehungsweise Wechselhalter ab, insbesondere von den aufzubringenden Klemmkräften.

Der Spannkopf 1 kann, wie bei bekannten Systemen vorgesehen, drehbar an einer Werkzeugeinrichtung befestigt werden. Dazu sind auf seiner Unterseite Erhöhungen 37 und Vertiefungen 39 vorgesehen, die im Wesentlichen radial zu einer gedachten Mittelachse des Spannkopfs 1 verlaufen und mit entsprechenden Erhöhungen und Vertiefungen an einem Gegenlager zusammenwirken. Der Spannkopf 1 kann also entsprechend der Teilung der Erhöhungen und Vertiefungen um bestimmte Drehwinkel verlagert und festgespannt werden. Auf der Oberseite 41 kann eine entsprechende Skala 43 vorgesehen werden, um die momentane Position des Spannkopfes 1 gegenüber einer Unterlage erfassen zu können.

Der Grundkörper 3 des Spannkörpers 1 weist eine zentrale durchgehende Ausnehmung 45 auf, die von einer geeigneten Spannvorrichtung durchgriffen werden kann, mit der der Spannkopf 1 auf einer Unterlage festgespannt werden kann.

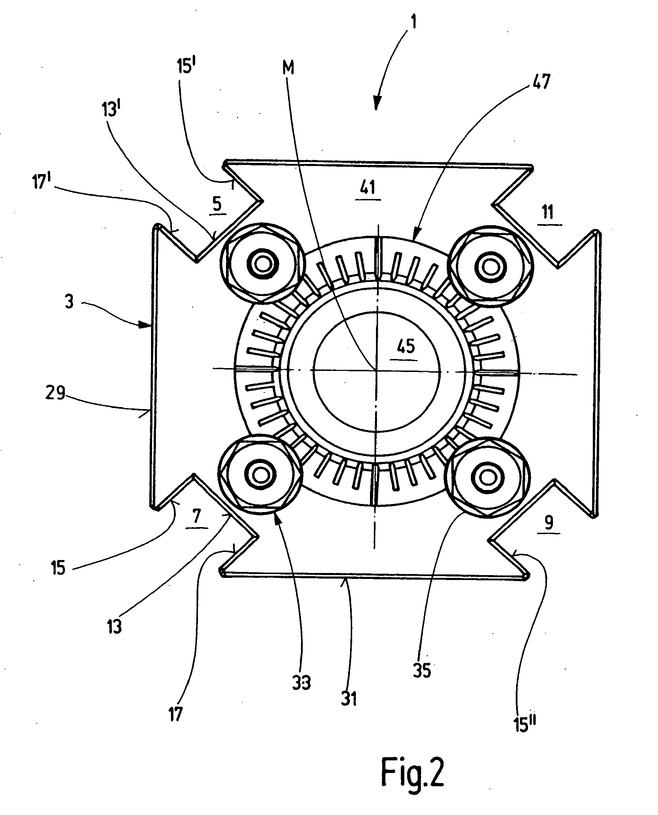

Figur 2 zeigt eine Draufsicht auf den Spannkopf 1, nämlich auf die Oberseite 41 des Grundkörpers 3. Gleiche Teile sind mit gleichen Bezugsziffern versehen, sodass auf die Beschreibung zu Figur 1 verwiesen wird.

Unten links ist in Figur 2 die Nut 7 dargestellt, oben links die zugehörige Nut 5. Die beiden weiteren Nuten 9 und 11 sind unten rechts und oben rechts an den Ecken des im Wesentlichen viereckigen, hier praktisch quadratischen, Grundkörpers 3 angeordnet.

Aus dieser Darstellung wird deutlich, dass die Nut 5, wie die Nut 7, eine Grundfläche 13' und davon ausgehend Seitenflächen 17' und 15' umfasst. Es gilt das zu Figur 1 und zu Nut 7 Gesagte entsprechend.

Bei der Draufsicht wird deutlich, dass die Seitenfläche 17' der Nut 5 und die Seitenfläche 15 der Nut 7 einen Winkel miteinander einschließen, sodass eine Schwalbenschwanzführung realisiert wird.

Entsprechend schließt die Seitenfläche 17 der Nut 7 mit der Seitenfläche 15" der Nut 9 einen Winkel ein, sodass auch hier eine Schwalbenschwanzführung realisiert wird.

Jeweils zwei benachbarte Nuten weisen also einander zugewandte Seitenflächen auf, die nicht parallel zueinander verlaufen, sondern unter einem Winkel zueinander angeordnet sind, sodass, wie oben erwähnt, eine Schwalbenschwanzführung realisiert wird. Die einander zugewandten Seitenflächen benachbarter Nuten sind zu einer gedachten Mittelebene symmetrisch angeordnet. Dabei können die Nuten selbst, wie hier dargestellt, einen rechteckigen Querschnitt aufweisen. Ihre Mittelebenen schneiden sich im Mittelpunkt M des Grundkörpers 3, hier also im Mittelpunkt der Ausnehmung 45.

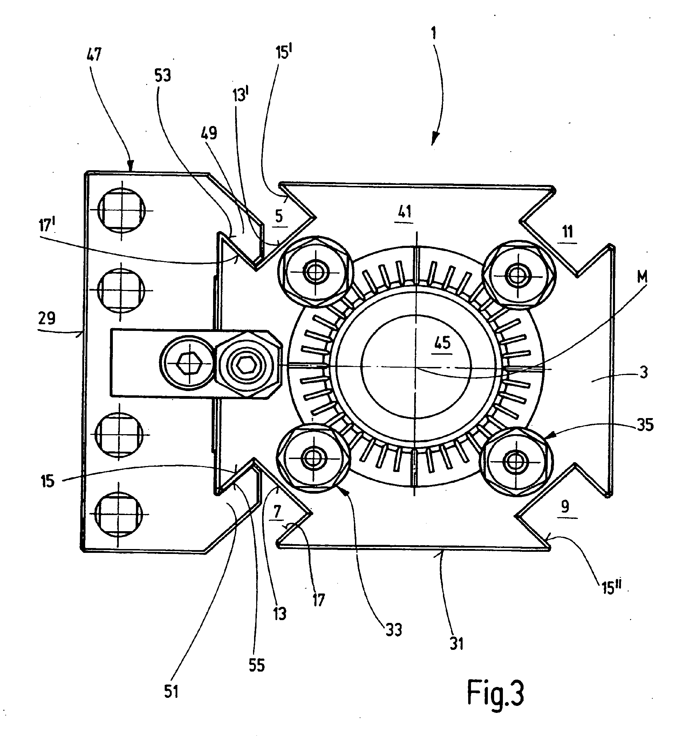

Figur 3 zeigt eine Draufsicht auf einen Spannkopf 1, wie er anhand der Figuren 1 und 2 erläutert wurde, mit einem angesetzten Wechselhalter 47, an dem ein Werkzeug befestigt werden kann. Der Wechselhalter 47 weist einen ersten Haltebereich 49 auf, der in die Nut 5 eingreift, außerdem einen zweiten Haltebereich 51, der in die Nut 7 eingreift. Der erste Haltebereich 49 weist eine erste Anlagefläche 53 auf, die an der Seitenfläche 17' der Nut 5 anliegt. Entsprechend weist der zweite Haltebereich 51 eine zweite Anlagefläche 55 auf, die an der Seitenfläche 15 der Nut 7 anliegt.

Die Draufsicht gemäß Figur 3 zeigt deutlich, dass die Haltebereiche 49 und 51 in die Nuten 5 und 7 eingreifen und aufgrund der Neigung der Anlageflächen 53 und 55 eine Schwalbenschwanzführung des Wechselhalters 47 realisieren.

Die senkrecht zur Anlagefläche 53 gemessene Dicke des ersten Haltebereichs 49 und die senkrecht zur Anlagefläche 55 gemessene Dicke des zweiten Haltebereichs 51 sind vorzugsweise so gewählt, dass in die Nuten 5 und 7 jeweils noch ein weiterer Haltebereich eines hier nicht dargestellten Wechselhalters oder Werkzeugs eingreifen kann. In jede Nut können also zwei Haltebereiche eingeführt werden. Aus Figur 3 ist ersichtlich, dass oben und unten an den Spannkopf 1 sowie gegenüber dem Wechselhalter 47 auch noch Werkzeuge oder Wechselhalter angebracht werden können. Diese müssen so ausgestaltet sein, dass sie mit anderen nicht kollidieren. Der in Figur 3 dargestellte Wechselhalter darf sich also nicht beliebig weit nach oben erstrecken, wenn ein oben am Spannkopf 1 angebrachter Wechselhalter sich nach links weiter hinaus erstrecken soll.

Die Ausgestaltung des Wechselhalters 47 oder eines hier angebrachten Werkzeugs ist in einem weiten Rahmen variabel. Entscheidend sind die beiden Haltebereiche 49 und 51, die so ausgebildet sein müssen, dass sie an den einander zugewandten Seitenflächen benachbarter Nuten anliegen und durch das Klemmstück festgespannt werden können.

Im Übrigen unterscheidet sich der Spannkopf 1 nicht von dem anhand von Figur 1 und 2 erläuterten. Daher wird auf die Ausführungen zu diesen Beschreibungen verwiesen.

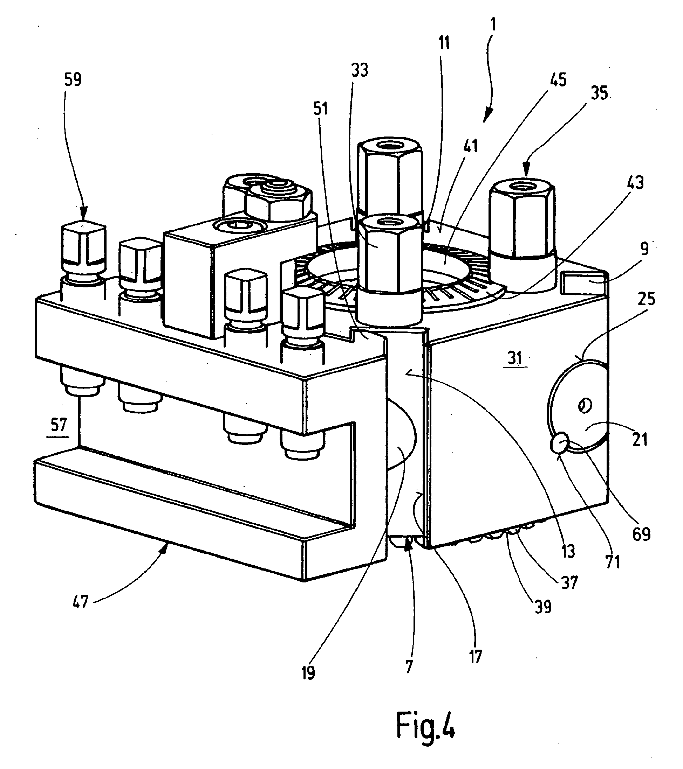

Figur 4 zeigt den in Figur 3 dargestellten Spannkopf in perspektivischer Darstellung, wobei die Ansicht des Spannkopfs 1 der in Figur 1 dargestellten entspricht. Gleiche Teile sind mit gleichen Bezugsziffern versehen, sodass auf die Erläuterungen zu den Figuren 1 bis 3 verwiesen wird, um Wiederholungen zu vermeiden.

Aus Figur 4 wird deutlich, dass der zweite Haltebereich 51 des Wechselhalters 47 in die Nut 7 eingreift. Der gegenüberliegende erste Haltebereich, der in die Nut 5 eingreift, wird hier verdeckt.

Der Wechselhalter 47 weist einen Aufnahmebereich 57 auf, in den ein Werkzeug eingesetzt und mittels geeigneter Spannvorrichtungen, hier Spannschrauben 59, fixiert werden kann. Die Ausgestaltung des Wechselhalters 47 ist frei wählbar. Entscheidend ist allerdings die Auslegung der Haltebereiche 49 und 51, die in die Nuten des Spannkopfs 1 eingreifen und die Schwalbenschwanzführung realisieren müssen.

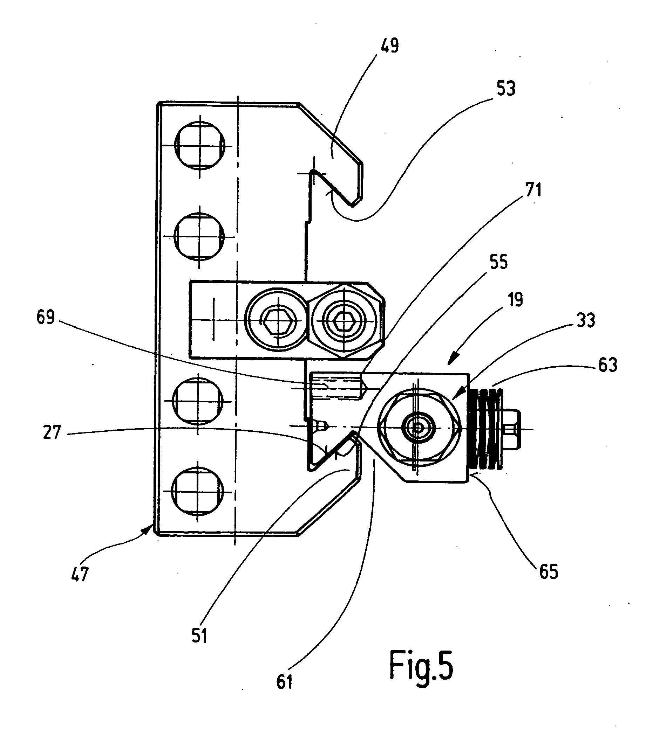

Figur 5 zeigt noch mal den Wechselhalter 47 in Draufsicht, also in der gleichen Perspektive wie in Figur 3, außerdem das Klemmstück 19 zur Verdeutlichung der Klemmfunktion der Klemmstücke. Der Grundkörper 3 des Spannkopfs 1 ist aus Gründen der besseren Übersichtlichkeit in Figur 5 nicht dargestellt.

Figur 5 zeigt deutlich, dass das Klemmstück 19 eine in Figur 1 bereits beschriebene Aussparung 61 aufweist, in die der zweite Haltebereich 51 des Wechselhalters 47 eingreift, wenn dieser in die zugehörige Nut 7 (siehe Figur 3) eingebracht ist. Figur 5 zeigt auch, dass die Klemmfläche 27 des Klemmstücks 19 im Wesentlichen parallel verläuft zur zweiten Anlagefläche 55 des zweiten Haltebereichs 51 des Wechselhalters 47.

Wird das Klemmstück 19 mittels der oben erläuterten Klemmvorrichtung 33 - in Figur 5 nach rechts - in seine Klemmposition verlagert, so liegt die Klemmfläche 27 fest an der zweiten Anlagefläche 55 an. Dabei ergibt sich quasi ein Keilgetriebe, aufgrund dessen eine erste Kraftkomponente den Wechselhalter 47 nach rechts an den hier nicht dargestellten Grundkörper 3 des Spannkopfs 1 heranzieht, außerdem eine in Figur 5 nach unten gerichtete, zweite Kraftkomponente, die den Wechselhalter 47 quasi nach unten drückt, sodass die erste Anlagefläche 53 des ersten Haltebereichs 49 fest an der Seitenfläche 17' der Nut 5 anliegt.

Dieses Spannprinzip ist grundsätzlich bekannt, sodass hier nicht näher darauf eingegangen wird.

Aus der Darstellung gemäß Figur 5 ist erkennbar, dass das Klemmstück 19 mittels der Klemmvorrichtung 33 nach rechts in die Klemmposition verlagerbar ist, wobei während dieser Verlagerung die Gegenkraft eines elastischen Elements 63 überwunden werden muss, das hier eine Anzahl von Tellerfedern umfasst. Diese stützen sich einerseits an einer Grundfläche 65 des Klemmstücks 19 ab, andererseits an einem geeigneten Widerlager im Grundkörper 3 des Spannkopfs 1.

Das elastische Element 63 ist nicht zwingend erforderlich. Es ist grundsätzlich auf denkbar, das Klemmstück 19 mittels einer geeigneten Klemmvorrichtung auch aus der Klemmposition nach links in seine Freigabeposition zu verlagern.

Im Folgenden wird auf eine Lagesicherungseinrichtung 67 näher eingegangen, die mit den im Spannkopf 1 vorgesehenen Klemmstücken zusammenwirkt.

Die Klemmstücke führen bei ihrer Betätigung eine Längsbewegung durch, also eine Bewegung aus der Freigabeposition entlang ihrer Mittelachse in Richtung der Klemmposition. Entsprechend findet eine Transversalbewegung statt, wenn sich die Klemmstücke aus ihrer Klemmposition in die Freigabeposition zurückverlagern. Beim Festklemmen eines Werkzeugs oder eines Wechselhalters bewegen sich die Klemmstücke in den Grundkörper 3 des Spannkopfs 1 hinein.

Es hat sich herausgestellt, dass nicht in allen Fällen eine reine Axialbewegung gewährleistet werden kann. Vielmehr ist es möglich, dass die Klemmstücke sich bei einer Verlagerung oder auch bei Einsatz des Spannkopfs 1 mit mindestens einem festgespannten Werkzeug oder Werkzeughalter auf Grund ihrer zylindrischen Ausgestaltung verdrehen, also eine Drehbewegung um ihre Längsachse durchführen, die mit der Mittelachse der zugehörigen Bohrung zusammenfällt. Dies führt dazu, dass die Wechselgenauigkeit in vielen Fällen nicht ausreichend ist. Wird also ein Klemmstück aus einer Freigabeposition in die Klemmposition verlagert und ein Werkzeug oder Werkzeughalter am Spannkopf 1 festgespannt, so wird während eines ersten Klemmvorgangs eine erste Befestigungsposition des Werkzeugs beziehungsweise Wechselhalters gegenüber dem Grundkörper 3 des Spannkopfs 1 erreicht. Wird ein Klemmstück gelöst und ein Werkzeug oder Wechselhalter ausgetauscht, so ergibt sich beim erneuten Festspannen des Werkzeug oder Wechselhalters mittels des Klemmstücks in manchen Fällen nicht die identische Befestigungsposition dadurch, dass sich das Klemmstück um einen bestimmten Winkel um seine Längsachse in der Bohrung verdreht hat.

Um diesem Nachteil entgegenzuwirken, wird eine Lagesicherungseinrichtung 67 vorgesehen, die eine Verdrehung eines Klemmstücks im Grundkörper 3 des Spannkopfs 1 verhindert, dabei aber die Verlagerung des Klemmstücks innerhalb des Grundkörpers 3 nicht behindert.

Die Lagesicherungseinrichtung 67 weist einen Stift 69 auf, der in Figur 1 quasi in Explosionsdarstellung wiedergegeben ist, er ist also nicht in eine zugehörige Bohrung 71 eingesetzt. Figur 1 zeigt deutlich, dass die Bohrung 71 bereichsweise im Grundkörper 3 des Spannkopfs 1 verläuft und bereichsweise im Klemmstück 19. Die Umfangsfläche der Bohrung 71 verläuft also einerseits in dem Grundkörper 3 und andererseits in dem Klemmstück 19. Die Bohrung 71 erstreckt sich vorzugsweise im Wesentlichen parallel zur Mittelachse der das Klemmstück 19 aufnehmenden Bohrung 23 und auch zur Mittelachse des Klemmstücks 19. Entsprechend verläuft auch die Mittelachse des Stifts 69 parallel zur Mittelachse der Bohrung 23 beziehungsweise des Klemmstücks 19, wenn dieser in die Bohrung 71 eingesetzt ist. Diese Ausgestaltung stellt sicher, dass der Stift 69 die Längsbeweglichkeit des zugehörigen Klemmstücks nicht behindert.

Aus Figur 1 ist ersichtlich, dass die Bohrung 71 gegenüber einer horizontalen Hilfslinie H1 und auch gegenüber einer vertikalen Hilfslinie H2 so versetzt angeordnet ist, dass sie in jedem Fall bereichsweise den Grundkörper 3 und bereichsweise das Klemmstück 19 erfasst. Durch eine gepunktete Linie, die den Schnittpunkt der Hilfslinien H1 und H2 mit dem Mittelpunkt der Bohrung 71 verbindet, wird deutlich, dass diese Linie mit der Hilfslinie H1 und mit der Hilfslinie H2 einen Winkel α von vorzugsweise 45° einschließt. Durch diese Anordnung der Bohrung 71 wird einerseits eine Verlagerung des Klemmstücks 19 nach rechts oder links in Richtung der ersten Hilfslinie H1 verhindert, andererseits eine Verlagerung des Klemmstücks 19 in Richtung der zweiten Hilfslinie H2. Grundsätzlich kann die Bohrung 71 überall auf der Grenze zwischen Klemmstück 19 und Grundkörper 3, also auf dem Rand der Bohrung 23 angeordnet sein. Entscheidend ist, dass die Bohrung sowohl den Grundkörper 3, als auch das Klemmstück 19 erfasst. Entscheidend ist aber, dass letztlich also eine Sicherung sowohl gegen eine horizontale als auch eine vertikale Verlagerung des Klemmstücks 19 geschaffen wird, außerdem eine Drehung des Klemmstücks 19 innerhalb der Bohrung 23, wenn der Stift 69 in die Bohrung 71 eingesetzt ist. Durch einen einzigen Stift 69 werden also eine Verdrehung des Klemmstücks 19 als auch dessen Verlagerung in horizontaler und/oder vertikaler Richtung verhindert.

Die Lagesicherungseinrichtung 67 zeichnet sich also durch einen sehr einfachen Aufbau auf.

In Figur 5 ist die den Stift 69 aufnehmende Bohrung 71 gestrichelt wiedergegeben.

Das Verfahren zur Realisierung der Lagesicherungseinrichtung 67 weist die folgenden Schritte auf:
Zunächst werden die exakten Maße beispielsweise der Nut 7 im Grundkörper vorzugsweise auf 0,01 mm genau ermittelt. Anschließend wird ein Distanzstück mit diesen Maßen in die Nut 7 eingebracht, dessen der Seitenfläche 15 zugewandte Außenseite dort angeordnet ist, wo bei Anbringung eines Werkzeugs oder Wechsel halters 47 die zweite Anlagefläche 55 des zweiten Haltebereichs 51 zu liegen kommt. Die der Seitenfläche 15 abgewandten Innenseite des Distanzstücks liegt hingegen an der zweiten Seitenfläche 17 der Nut 7 an. Es wird also mit Hilfe des Distanzstücks quasi eine Klemmsituation simuliert, in der ein Werkzeug oder ein Wechselhalter am Spannkopf 1 befestigt wird. Dann wird mittels der Klemmvorrichtung 33 das zugehörige Klemmstück 19 in seine Klemmposition gebracht, also gegenüber der Seitenfläche 29 ins Innere des Grundkörpers 3 verlagert. In dieser Klemmposition liegt die Klemmfläche 27 fest an der Außenseite des Distanzstücks an, während dessen Innenseite an der Seitenfläche 17 der Nut 7 anliegt. Damit nimmt das Klemmstück 19 eine exakt ausgerichtete Position ein, die es auch dann annimmt, wenn ein Werkzeug beziehungsweise Wechselhalter am Spannkopf 1 befestigt wird. In dieser ausgerichteten Lage des Klemmstücks 19, in der also die Klemmfläche 27 des Klemmstücks 19 exakt auf zwei Flächen 15 und 17 der Nut 7 ausgerichtet ist, wird die Bohrung 71 in den Grundkörper 3 und in das Klemmstück 19 eingebracht, wobei die Wandung der Bohrung 71 zum einen den Grundkörper 3 und zum anderen das Klemmstück 19 schneidet.

Anschließend wird, ohne das Klemmstück 19 zu lösen, der Stift 69 in die Bohrung 71 eingesetzt.

Sollten über die Höhe der Nut 7 mehrere Klemmstücke vorgesehen sein, so würde dieser Vorgang bei allen der Nut 7 zugeordneten Klemmstücken wiederholt: es würde dort nach dem Einspannen eines Distanzstücks die Bohrung eingebracht und der Stift eingesetzt.

Bei der Realisierung der Lagesicherungseinrichtung 67 wird bei allen Klemmstücken des Spannkopfs 1 in gleicher Weise vorgegangen.

Dadurch, dass die Bohrung 71 und der zugehörige Stift 69 im verspannten und exakt ausgerichteten Zustand des Klemmstücks 19 eingebracht beziehungsweise eingesetzt werden, wird sichergestellt, dass Maßtoleranzen ausgeglichen werden: die Bohrung 71 wird durch die Anwendung eines Distanzteils in der Position eingebracht, die das Klemmstück 19 in der Klemmposition einnehmen soll. In dieser Lage wird auch der Stift 69 eingesetzt, sodass das Klemmstück sich weder in horizontaler noch vertikaler Richtung beziehungsweise durch Drehung aus dieser vorgegebenen Lage herausbewegen kann. Es ist ausschließlich möglich, das Klemmstück 19 in axialer Richtung, also in Richtung seiner Mittelachse, zu verlagern, während es aus einer Freigabeposition in die Klemmposition und zurück bewegt wird.

Es hat sich herausgestellt, dass die Lagesicherungseinrichtung 67 besonders effektiv ist, wenn der Stift 69 und die zugehörige Bohrung 71 um 45° versetzt sind gegenüber der ersten und zweiten Hilfslinie H1 und H2. In Figur 1 ist die Bohrung 71 unterhalb der ersten Hilfslinie H1 angeordnet. Es wäre aber sehr wohl möglich, diese auch symmetrisch oberhalb der ersten Hilfslinie H1 vorzusehen und den Stift dort einzubringen.

Die Lagesicherungseinrichtung 67 zeichnet sich also dadurch aus, dass eine Verdrehung eines Klemmstücks verhindert wird, während eine Axialbewegung möglich bleibt. Die hier beschrieben Realisierung ist relativ einfach durchführbar. Sie zeichnet sich überdies dadurch aus, dass die Bohrung und der Stift in verspanntem und mittels eines auf die Maße der Nut angepassten Distanzteils exakt ausgerichtetem Zustand eines Klemmstücks realisiert werden, sodass Maßtoleranzen sich nicht auswirken können.

## Patentansprüche

1. Spannkopf für Werkzeuge oder Wechselhalter mit
- einem Grundkörper (3),
- mindestens zwei in den Grundkörper (3) eingebrachten Nuten (5,7,9,11),
- mindestens einem Klemmstück (19,21), das in eine Klemmposition und in eine Freigabeposition verlagerbar ist, und das mittels einer Klemmvorrichtung (33,35) in die Klemmposition verlagerbar ist, wobei
- das Klemmstück (19,21) eine Klemmfläche (27) aufweist, die in der Klemmposition über eine Seitenfläche der mindestens einen Nut (5,7,9,11) vorsteht,
- einer Lagesicherungseinrichtung (67), die eine Verdrehung des Klemmstücks (19,21) im Grundkörper (3) des Spannkopfs (1) verhindert, und
- die Verlagerung des Klemmstücks (19,21) in die Klemmposition und in die Freigabeposition nicht behindert,
**dadurch gekennzeichnet, dass**
- die Lagesicherungseinrichtung (67) einen Stift (69) aufweist, der in eine Bohrung (71) einsetzbar ist, deren Wandung sowohl das Klemmstück (19,21) als auch den Grundkörper (3) des Spannkopfs (1) schneidet, und dass
- die Bohrung (71) im Wesentlichen parallel zum Verlagerungsweg des Klemmstücks (19,21) verläuft.

2. Spannkopf nach Anspruch 1, **dadurch gekennzeichnet, dass** das Klemmstück (19,21) eine im Wesentlichen zylindrische Umfangsfläche aufweist.

3. Spannkopf nach einem der vorhergehenden Ansprüche, **dadurch gekennzeichnet, dass** das Klemmstück (19,21) eine Aussparung (61) mit einer Klemmfläche (27) aufweist, die im Wesentlichen parallel zu einer Seitenfläche (15,15',15") der Nut (5,7,9) verläuft.

4. Spannkopf nach einem der vorhergehenden Ansprüche, **dadurch gekennzeichnet, dass** die Nuten (5,7,9,11) parallel zueinander verlaufen.

5. Spannkopf nach einem der vorangehenden Ansprüche, **dadurch gekennzeichnet, dass** die einander zugewandten Seitenflächen (15,17') benachbarter Nuten (5,7) einen Winkel miteinander einschließen.

6. Spannkopf nach Anspruch 5, **dadurch gekennzeichnet, dass** die einander zugewandten Seitenflächen zu einer gedachten Mittelebene symmetrisch zueinander verlaufen.

7. Spannkopf nach einem der vorhergehenden Ansprüche, **dadurch gekennzeichnet, dass** vier Nuten (5,7,9,11) vorgesehen sind.

8. Spannkopf nach einem der vorhergehenden Ansprüche, **dadurch gekennzeichnet, dass** der Grundkörper (3) rechteckig ausgebildet ist und die Nuten (5,7,9,11) in dessen Ecken verlaufen.

9. Spannkopf nach einem der vorhergehenden Ansprüche, **dadurch gekennzeichnet, dass** die Nuten (5,7,9,11) so breit sind, dass jeweils zwei Werkstücke beziehungsweise Wechselhalter eingreifen können.

10. Spannkopf nach einem der vorhergehenden Ansprüche, **dadurch gekennzeichnet, dass** die Klemmvorrichtung (33,35) einen mit dem Klemmstück (19,21) zusammenwirkenden Exzenter aufweist.

11. Verfahren zur Realisierung einer Lagesicherungseinrichtung (67) an einem Spannkopf (1) mit einem Grundkörper (3), mindestens zwei in den Grundkörper eingebrachten Nuten (5,7,9,11), mindestens einem Klemmstück (19,21), das in eine Klemmposition und in eine Freigabeposition verlagerbar ist und das mittels einer Klemmvorrichtung (33,35) in die Klemmposition verlagerbar ist, wobei das Klemmstück eine Klemmfläche (27) aufweist, die in der Klemmposition über eine Seitenfläche (15) der mindestens einen Nut vorsteht, und mit einer Lagesicherungseinrichtung (67), die eine Verdrehung des Klemmstücks (19,21) im Grundkörper des Spannkopfs (1) verhindert, dessen Verlagerung in die Klemmposition und in die Freigabeposition jedoch nicht behindert, insbesondere zur Realisierung einer Lagesicherungseinrichtung (67) an einem Spannkopf (1) nach einem der vorhergehenden Ansprüche 1 bis 10, **dadurch gekennzeichnet, dass**
- in die Nut (5,7,9,11), der das Klemmstück (19,21) zugeordnet ist, ein Distanzstück eingebracht wird,
- das Klemmstück (19,21) mittels der Klemmvorrichtung (33,35) in seine Klemmposition verspannt und damit exakt ausgerichtet wird,
- bereichsweise in den Grundkörper (3) und bereichsweise in das Klemmstück (19,21) eine Bohrung (71) eingebracht wird, die parallel zum Verlagerungsweg des Klemmstücks (19,21) verläuft und dass
- ein Stift (69) in die Bohrung (71) eingeführt wird, dessen Außendurchmesser so auf den Innendurchmesser der Bohrung abgestimmt ist, dass ein fester Sitz des Stifts gewährleistet ist.

12. Verfahren nach Anspruch 11, **dadurch gekennzeichnet, dass** die Bohrung (71) gegenüber einer gedachten horizontalen ersten Hilfslinie (H1) und gegenüber einer gedachten vertikalen zweiten Hilfslinie (H2) so versetzt ist, dass sie bereichsweise den Grundörper (3) und bereichsweise das Klemmstück (19,21) erfasst..

13. Verfahren nach Anspruch 12, **dadurch gekennzeichnet, dass** eine gedachte Linie, die einen Mittelpunkt der Bohrung (71) mit einem Schnittpunkt der Hilfslinien (H1,H2) verbindet, einen Winkel (α) von 45° mit der gedachten horizontalen ersten Hilfslinie (H1) und mit der gedachten vertikalen zweiten Hilfslinie (H2) einschließt.

14. Verfahren nach einem der Ansprüche 11 bis 13, **dadurch gekennzeichnet, dass** das Distanzstück die Maße der Nut (5,7,9,11) aufweist.

## Claims

1. A clamping head for tools or a quick change tool holder, comprising
- a base body (3),
- at least two grooves (5, 7, 9, 11) set into the base body (3),
- at least one clamp piece (19, 21) that can be displaced to a clamp position and to a release position and that can be displaced to the clamp position by means of a clamping device (33, 35), wherein
- the clamp piece (19, 21) includes a clamp surface (27) which, in the clamp position, projects beyond a lateral surface of the at least one groove (5, 7, 9, 11),
- a position securing device (67) that prevents the clamp piece (19, 21) from turning in the base body (3) of the clamping head (1), and
- that does not obstruct the displacement of the clamp piece (19, 21) to the clamp position and to the release position,
**characterized in that**
- the position securing device (67) includes a pin (69) that can be inserted into a hole (71) the wall of which intersects both the clamp piece (19, 21) and the base body (3) of the clamping head (1), and that
- the hole (71) substantially extends in parallel to the displacement path of the clamp piece (19, 21).

2. The clamping head according to Claim 1, **characterized in that** the clamp piece (19, 21) includes a circumferential surface that is substantially cylindrical.

3. The clamping head according to any one of the preceding claims, **characterized in that** the clamp piece (19, 21) includes a recess (61) having a clamp surface (27) which substantially extends in parallel to a lateral surface (15, 15', 15") of the groove (5, 7, 9).

4. The clamping head according to any one of the preceding claims, **characterized in that** the grooves (5, 7, 9, 11) extend in parallel to each other.

5. The clamping head according to any one of the preceding claims, **characterized in that** the lateral surfaces (15, 17") of neighboring grooves (5, 7) enclose an angle with each other, said lateral surfaces (15, 17") facing each other.

6. The clamping head according to Claim 5, **characterized in that** the lateral surfaces that are facing each other extend symmetrically to each other in relation to a theoretical center plane.

7. The clamping head according to any one of the preceding claims, **characterized in that** four grooves (5, 7, 9, 11) are provided.

8. The clamping head according to any one of the preceding claims, **characterized in that** the base body (3) has a rectangular shape and the grooves (5, 7, 9, 11) extend in the corners of said base body (3).

9. The clamping head according to any one of the preceding claims, **characterized in that** the grooves (5, 7, 9, 11) have such a width that two workpieces or quick change tool holders can engage each of said grooves (5, 7, 9, 11).

10. The clamping head according to any one of the preceding claims, **characterized in that** the clamping device (33, 35) includes an eccentric that cooperates with the clamp piece (19, 21).

11. A method for implementing a position securing device (67) on a clamping head (1) comprising a base body (3), at least two grooves (5, 7, 9, 11) set into the base body, at least one clamp piece (19, 21) that can be displaced to a clamp position and to a release position and that can be displaced to the clamp position by means of a clamping device (33, 35), wherein the clamp piece includes a clamp surface (27) which, in the clamp position, projects beyond a lateral surface (15) of the at least one groove, and comprising a position securing device (67) that prevents the clamp piece (19, 21) from turning in the base body of the clamping head (1) but does not obstruct the displacement of said clamp piece (19, 21) to the clamp position and to the release position, more particularly for implementing a position securing device (67) on a clamping head (1) according to any one of the preceding claims 1 to 10, **characterized in that**
- a distance piece is set into the groove (5, 7, 9, 11) to which the clamp piece (19, 21) is assigned,
- the clamp piece (19, 21) is clamped into its clamp position by means of the clamping device (33, 35) and is exactly aligned therewith,
- a hole (71) is set into the base body (3) in an area thereof and into the clamp piece (19, 21) in an area thereof, said hole (71) extending in parallel to the displacement path of the clamp piece (19, 21), and that
- a pin (69) is introduced into the hole (71), with the outside diameter of said pin (69) being adjusted to match the inside diameter of the hole such that firm seating of the pin is ensured.

12. The method according to Claim 11, **characterized in that** the hole (71) is offset in relation to a theoretical horizontal first auxiliary line (H1) and in relation to a theoretical vertical second auxiliary line (H2) such that it seizes the base body (3) in an area thereof and the clamp piece (19, 21) in an area thereof.

13. The method according to Claim 12, **characterized in that** a theoretical line which connects a center point of the hole (71) to an intersection point of the auxiliary lines (H1, H2) encloses an angle (α) of 45° with the theoretical horizontal first auxiliary line (H1) and with the theoretical vertical second auxiliary line (H2).

14. The method according to any one of Claims 11 to 13, **characterized in that** the distance piece has the dimensions of the groove (5, 7, 9, 11).

## Revendications

1. Tête de serrage pour outils ou supports de changement comprenant
- un corps de base (3),
- au moins deux rainures (5, 7, 9, 11) introduites dans le corps de base (3),
- au moins une pièce de calage (19, 21) qui peut être déplacée dans une position de calage et dans une position de libération et qui peut être déplacée dans la position de calage au moyen d'un dispositif de calage (33, 35), dans laquelle
- la pièce de calage (19, 21) présente une surface de calage (27) qui fait saillie dans la position de calage au-delà d'une surface latérale de l'au moins une rainure (5, 7, 9, 11),
- un dispositif de fixation en place (67) qui empêche une rotation de la pièce de calage (19, 21) dans le corps de base (3) de la tête de serrage (1) et
- n'empêche pas le déplacement de la pièce de calage (19, 21) dans la position de calage et dans la position de libération,
**caractérisée en ce que**
- le dispositif de fixation en place (67) présente une tige (69) qui peut être insérée dans un alésage (71) dont la paroi coupe aussi bien la pièce de calage (19, 21) que le corps de base (3) de la tête de serrage (1), et que
- l'alésage (71) s'étend essentiellement parallèlement à la course de déplacement de la pièce de calage (19, 21).

2. Tête de serrage selon la revendication 1, **caractérisée en ce que** la pièce de calage (19, 21) présente une surface périphérique essentiellement cylindrique.

3. Tête de serrage selon l'une quelconque des revendications précédentes, **caractérisée en ce que** la pièce de calage (19, 21) présente un évidement (61) avec une surface de calage (27) qui s'étend essentiellement parallèlement à une surface latérale (15, 15', 15") de la rainure (5, 7, 9).

4. Tête de serrage selon l'une quelconque des revendications précédentes, **caractérisée en ce que** les rainures (5, 7, 9, 11) s'étendent parallèlement les unes aux autres.

5. Tête de serrage selon l'une quelconque des revendications précédentes, **caractérisée en ce que** les surfaces latérales tournées l'une vers l'autre (15, 17') de rainures voisines (5, 7) incluent un angle entre elles.

6. Tête de serrage selon la revendication 5, **caractérisée en ce que** les surfaces latérales tournées l'une vers l'autre s'étendent symétriquement l'une à l'autre vers un plan central imaginaire.

7. Tête de serrage selon l'une quelconque des revendications précédentes, **caractérisée en ce que** quatre rainures (5, 7, 9, 11) sont prévues.

8. Tête de serrage selon l'une quelconque des revendications précédentes, **caractérisée en ce que** le corps de base (3) est réalisé de manière rectangulaire et les rainures (5, 7, 9, 11) s'étendent dans ses coins.

9. Tête de serrage selon l'une quelconque des revendications précédentes, **caractérisée en ce que** les rainures (5, 7, 9, 11) sont si larges que deux pièces à usiner ou supports de changement peuvent à chaque fois s'engrener.

10. Tête de serrage selon l'une quelconque des revendications précédentes, **caractérisée en ce que** le dispositif de calage (33, 35) présente un excentrique coopérant avec la pièce de calage (19, 21).

11. Procédé de réalisation d'un dispositif de fixation en place (67) sur une tête de serrage (1) comprenant un corps de base (3), au moins deux rainures (5, 7, 9, 11) introduites dans le corps de base, au moins une pièce de calage (19, 21) qui peut être déplacée dans une position de calage et dans une position de libération et qui peut être déplacée dans la position de calage au moyen d'un dispositif de calage (33, 35), dans lequel la pièce de calage présente une surface de calage (27) qui fait saillie dans la position de calage au-delà d'une surface latérale (15) de l'au moins une rainure, et comprenant un dispositif de fixation en place (67) qui empêche une rotation de la pièce de calage (19, 21) dans le corps de base de la tête de serrage (1) mais n'empêche pas son déplacement dans la position de calage et dans la position de libération, notamment de réalisation d'un dispositif de fixation en place (67) sur une tête de serrage (1) selon l'une quelconque des revendications précédentes 1 à 10, **caractérisé en ce que**
- un écarteur est introduit dans la rainure (5, 7, 9, 11) à laquelle la pièce de calage (19, 21) est associée,
- la pièce de calage (19, 21) est haubanée dans sa position de calage au moyen du dispositif de calage (33, 35) et est ainsi exactement orientée,
- un alésage (71) qui s'étend parallèlement à la course de déplacement de la pièce de calage (19, 21) est introduit par région dans le corps de base (3) et par région dans la pièce de calage (19, 21) et que
- une tige (69), dont le diamètre externe est adapté au diamètre interne de l'alésage de telle sorte qu'un siège fixe de la tige est garanti, est introduite dans l'alésage (71).

12. Procédé selon la revendication 11, **caractérisé en ce que** l'alésage (71) est décalé par rapport à une première ligne auxiliaire horizontale imaginaire (H1) et par rapport à une seconde ligne auxiliaire verticale imaginaire (H2) de telle sorte qu'il intercepte par région le corps de base (3) et par région la pièce de calage (19, 21).

13. Procédé selon la revendication 12, **caractérisé en ce qu'**une ligne imaginaire qui relie un point central de l'alésage (71) à un point de coupe des lignes auxiliaires (H1, H2) inclut un angle (α) de 45° avec la première ligne auxiliaire horizontale imaginaire (H1) et avec la seconde ligne auxiliaire verticale imaginaire (H2).

14. Procédé selon l'une quelconque des revendications 11 à 13, **caractérisé en ce que** l'écarteur présente les dimensions de la rainure (5, 7, 9, 11).
